# EUROPÄISCHE PATENTSCHRIFT

(11) **EP 4 380 750 B1**
(45) Veröffentlichungstag und Bekanntmachung des Hinweises auf die Patenterteilung: **20.08.2025**
(21) Anmeldenummer: 22744728.1
(22) Anmeldetag: 07.07.2022
(51) Int. Cl.: B23K 26/06, B23K 26/082, B23K 26/364, B23K 26/402, B23K 37/02, B23K 37/04, B23K 101/18, B23K 103/00

(54) **VERFAHREN ZUR HERSTELLUNG EINES FLÄCHIGEN NACHGIEBIGEN VERBUNDMATERIALS**
METHOD FOR PRODUCING A FLAT, FLEXIBLE COMPOSITE MATERIAL
PROCÉDÉ DE PRODUCTION D'UN MATÉRIAU COMPOSITE FLEXIBLE PLAT

(30) Priorität: 03.08.2021 DE 102021120097
(43) Veröffentlichungstag der Anmeldung: 12.06.2024
(73) Patentinhaber: NUO GMBH, 76139 Karlsruhe (DE)
(72) Erfinder: ANTONELLI, Marcello, 00163 Rom (IT); ANTONELLI, Marta, 00163 Rom (IT)
(74) Vertreter: Lichti - Patentanwälte Partnerschaft mbB
(86) Internationale Anmeldenummer: PCT/EP2022/068839
(87) Internationale Veröffentlichungsnummer: WO 2023/011834

(56) Entgegenhaltungen:
- JP-A- 2017 070 978
- US-A1- 2009 188 543
- US-A1- 2015 050 454

## Beschreibung

Die Erfindung betrifft ein Verfahren zur Herstellung eines flächigen nachgiebigen Verbundmaterials, welches eine Trägerschicht aus einem nachgiebigen Material, insbesondere in Form eines Textilmaterials, und eine hiermit verbundene, demgegenüber starrere Deckschicht aus Holzfurnier aufweist, wobei in das Holzfurnier der Deckschicht mittels Lasergravieren eine in Form einer Mehrzahl an Nuten ausgebildete Struktur eingraviert wird, um die Nachgiebigkeit des Holzfurniers der Deckschicht zu erhöhen, umfassend die folgenden Schritte:
- Erstellen der in das Holzfurnier der Deckschicht einzugravierenden Struktur und Einlesen der Struktur in eine Steuereinrichtung einer programmtechnisch eingerichteten Lasergraviervorrichtung;
- Anordnen des Verbundmaterials auf einem Arbeitstisch der Lasergraviervorrichtung derart, dass sich das Holzfurnier der Deckschicht des Verbundmaterials auf der dem Arbeitstisch abgewandten Seite befindet; und
- Aktivieren wenigstens eines mit der Steuereinrichtung in Verbindung stehenden Laserkopfes der Lasergraviervorrichtung und Eingravieren der Struktur in das Holzfurnier der Deckschicht des Verbundmaterials mittels des von dem Laserkopf erzeugten Laserstrahls (siehe US 2015/050454 A1).

Solchermaßen hergestellte Verbundmaterialien sind bekannt und umfassen einerseits eine Trägerschicht aus einem nachgiebigen Material, welche üblicherweise von einem Textilmaterial, wie einem Gewebe, Gestricke, Gelege, Gewirke, Vlies oder dergleichen, gebildet ist. Die demgegenüber starrere Deckschicht dient als Dekorschicht und besteht vornehmlich aus Holzwerkstoffen, insbesondere aus Echtholzfurnier, welches beispielsweise eine Dicke zwischen etwa 0,1 mm und etwa 1 mm, insbesondere zwischen etwa 0,25 mm und etwa 0,75 mm besitzen kann und in der Regel mit der Trägerschicht verklebt ist, wobei die Deckschicht beispielsweise unter Zwischenanordnung einer Kleberschicht auf die Trägerschicht auflaminiert wird. Das Holzfurnier der Deckschicht ist mit einer in Form einer Mehrzahl an Nuten ausgebildeten Struktur versehen, welche mittels Lasergravieren in das Holzfurnier eingraviert wird und der Deckschicht einerseits einen ästhetischen Gesamteindruck vermitteln soll, andererseits insbesondere zur Erhöhung der Nachgiebigkeit des gegenüber der textilen Trägerschicht starreren Holzfurniers der Deckschicht dient. Die feine Lasergravur verleiht dem Holzfurnier der Deckschicht und folglich dem gesamten Verbundmaterial dabei eine außerordentlich hohe Flexibilität ähnlich Leder- oder Textilmaterialien bei gleichwohl sehr hoher mechanischer Festigkeit, so dass sich ein solches Verbundmaterial für eine Vielzahl an Anwendungsgebieten anbietet, wie beispielsweise für Kleidungsstücke, als Dekormaterial für nicht notwendigerweise ebene Sichtflächen von Möbeln, Gehäusen oder Fahrzeuginnenverkleidungsteilen, zur Bespannung von Sitzmöbeln, für Gardinen, Vorhänge, Wand-, Decken-, Fußbodenverkleidungen und dergleichen mehr.

Die EP 2 776 240 B1 beschreibt ein gattungsgemäßes Verfahren zur Herstellung eines flächigen nachgiebigen Verbundmaterials mit einer Trägerschicht aus einem Textilgewebe und einer hiermit verklebten Deckschicht aus Holz, wobei das Holzfurnier der Deckschicht des vorgefertigten Verbundmaterials mittels Lasergravierens mit der gewünschten Struktur aus einem einheitlichen Nutenmuster versehen wird.

In der Praxis hat sich indes gezeigt, dass insbesondere das Aufbringen der in Form einer Mehrzahl an Nuten gebildeten Struktur des Holzfurniers der Deckschicht mittels Lasergravieren eine erhebliche technische Herausforderung darstellt, da die in das Holzfurnier eingravierten Nuten der Struktur sowohl aus ästhetischen Gründen als auch im Hinblick auf eine hohe mechanische Stabilität des Verbundmaterials eine möglichst gleichmäßige, aber sehr geringe Breite, vorzugsweise **z.B.** im Bereich von etwa 10 µm bis etwa 100 µm, sowie eine möglichst gleichmäßige Tiefe aufweisen sollten, um das Holzfurnier der Deckschicht zumindest teilweise oder im Wesentlichen vollständig zu durchtrennen, während die Trägerschicht im Wesentlichen unversehrt bleiben sollte. Darüber hinaus sollte sich die Nutenstruktur mit hoher Präzision im Wesentlichen gleichmäßig über die Gesamtfläche des Holzfurniers der Deckschicht erstrecken, ohne dass fertigungstechnisch bedingte Fehlstellen optisch erkennbar sind.

Den vorgenannten Anforderungen lässt sich insbesondere mit zunehmenden Abmessungen des Holzfurniers der Deckschicht bislang aus mehreren Gründen nicht in zufriedenstellender Weise Rechnung tragen. So hat man beispielsweise versucht, den Laserkopf in programmtechnisch gesteuerter Weise mikromechanisch über die Breite des Holzfurniers der Deckschicht zu verlagern, was sich sowohl in konstruktiver Weise als auch hinsichtlich des Energie- und Zeitaufwandes als sehr aufwändig erweist. Stattdessen wurde auch versucht, die Nutenstruktur mittels eines galvanometrischen Lasers in das Holzfurnier der Deckschicht einzugravieren, welcher in Bezug auf das Verbundmaterial stationär gehalten wird, aber einen in programmtechnisch gesteuerter Weise verlagerbaren Spiegel zur Ablenkung des Laserstrahls entsprechend der gewünschten Struktur aufweist. Während ein solcher galvanometrischer Laserkopf gegenüber einem herkömmlichen, entlang einer Ebene verlagerbaren Laserkopf eine deutlich höhere Effizienz aufweist und die jeweilige Struktur insbesondere bis zu etwa 10 bis 65 mal schneller in das Holzfurnier der Deckschicht einzugravieren vermag, stellt sich in diesem Fall das Problem, dass der galvanometrische Laserkopf einerseits nicht zu nahe an dem Holzfurnier der Deckschicht angeordnet werden kann, da sich insbesondere bei einer relativ großflächigen Deckschicht an deren Randbereichen ein sehr schräger Einfallswinkel des Laserstrahls ergibt, welcher folglich in (zu) breiten und unscharfen Nuten der Struktur mit nur noch geringer Eindringtiefe in die Deckschicht resultiert, so dass eine ästhetisch hochwertige und einheitliche Struktur über die gesamte Fläche der Deckschicht nicht erhalten werden kann, wobei zudem die Gefahr besteht, dass der Laserkopf infolge lokaler Verdampfung des organischen Materials der Deckschicht verschmutzt wird und einer häufigen Reinigung bedarf, was zu regelmäßigen Standzeiten der Lasergraviervorrichtungen führt. Andererseits kann der galvanometrische Laserkopf auch nicht zu weit von dem Holzfurnier entfernt angeordnet werden, da es in diesem Fall neben einem erhöhten Energieaufwand, um der Energiedissipation mit zunehmender Strahllänge Rechnung zu tragen, insbesondere nicht möglich ist, die Struktur in Form von sehr feinen Nuten präzise in das Holzfurnier der Deckschicht einzubringen, da sich der Laserstrahl mit zunehmender Strahllänge auffächert bzw. verbreitert.

Die JP 2017-070978 A beschreibt ein Verfahren zum Lasergravieren von dekorativen, fadenförmigen Strukturen in ein nicht näher definiertes Substrat mittels der Laserstrahlen von wenigstens zwei benachbarten Laserköpfen. Zur Erzielung eines weichen Übergangs der von einem jeweiligen der beiden Laserköpfen erzeugten Strukturen wird vorgeschlagen, die von einem jeweiligen Laserkopf erzeugte Struktur in einem Überlappungsbereich der Arbeitsbereiche der Laser mittels beider Laserköpfe zu erzeugen. Da auf diese Weise in dem Überlappungsbereich die Strukturen beider Laserköpfe - also doppelt so viele Linienstrukturen wie in den benachbarten diskreten Arbeitsbereichen eines jeweiligen Laserkopfes - vorhanden sind, lässt das Ergebnis insbesondere in ästhetischer Hinsicht jedoch zu wünschen übrig.

Darüber hinaus sind zu anderen Anwendungszwecken Lasergraviervorrichtungen mit mehreren Laserköpfen bekannt, wobei beispielsweise der DE 196 34 190 A1 eine Lasergraviervorrichtung mit zwei galvanometrischen Laserköpfen zu entnehmen ist, deren Laserstrahlen mittels gesteuert verlagerbarer Spiegel gleichzeitig, aber unabhängig voneinander auf verschiedene Arbeitsbereiche eines Werkstückes fokussiert werden können, um das Werkstück an verschiedenen Stellen mit einer Beschriftung zu versehen. Das Aufbringen einer weitgehend einheitlichen Struktur auf das Holzfurnier der Deckschicht eines gattungsgemäßen Verbundkörpers ist auf diese Weise allerdings allenfalls bedingt möglich, da sich gezeigt hat, dass der Übergang zwischen den von dem Laserstrahl eines jeweiligen Laserkopfes erzeugten Strukturabschnitten optisch erkennbar ist und folglich den ästhetischen Anforderungen nicht standzuhalten vermag. Entsprechendes gilt für ein aus der US 2010/0272961 A1 bekanntes Lasergravierverfahren zur Erzeugung einer aus mehreren Linien gebildeten Struktur, welches den Einsatz von zwei Lasern mit je einem, einem jeweiligen Laser zugeordneten Arbeitsbereich umfassen kann. Schließlich ist aus der US 2009/0188543 A1 ein Verfahren zum Eingravieren von linienförmigen Strukturen auf dünne Beschichtungen von Solarpaneelen mittels mehreren Lasern bekannt, indem der Anfangspunkt einer jeweiligen, mittels des einen Lasers erzeugten Linie mit dem Endpunkt einer anderen, mittels des anderen Lasers erzeugten Linie überlappt wird, **d.h.** die Anfangs- bzw. Endpunkte einer jeweiligen Linie der Struktur wird von beiden Lasern graviert.

Der Erfindung liegt die Aufgabe zugrunde, ein Verfahren zur Herstellung eines flächigen nachgiebigen Verbundmaterials der eingangs genannten Art unter zumindest weitestgehender Vermeidung der vorgenannten Nachteile auf einfache und kostengünstige Weise dahingehend weiterzubilden, dass ein sowohl zeit- als auch energieeffizientes Eingravieren einer einheitlichen und homogenen Struktur über die gesamte Fläche des Holzfurniers der Deckschicht auch großformatiger Verbundmaterialien mit einer sehr hohen Präzision möglich ist.

Erfindungsgemäß wird diese Aufgabe bei einem Verfahren der eingangs genannten Art dadurch gelöst, dass wenigstens zwei mit der Steuereinrichtung in Verbindung stehende Laserköpfe der Lasergraviervorrichtung aktiviert werden, um mittels des Laserstrahls eines jeweiligen Laserkopfes die Struktur gleichzeitig in benachbarte, einem jeweiligen Laserkopf zugeordnete Bereiche des Holzfurniers der Deckschicht des Verbundmaterials einzugravieren, wobei die Laserköpfe derart programmtechnisch gesteuert werden, dass in einem ersten Überlappungsabschnitt der benachbarten Bereiche des Verbundmaterials die Struktur zufällig teilweise von dem Laserstrahl des einen Laserkopfes und teilweise von dem Laserstrahl des anderen Laserkopfes in das Holzfurnier der Deckschicht eingraviert wird, so dass sich keine scharfe Grenze zwischen den Arbeitsbereichen der Laserköpfe und folglich auch kein sichtbarer Übergang der von verschiedenen Laserköpfen bearbeiteten Bereiche der Deckschicht ergibt.

Bei einem mittels eines solchen Verfahrens hergestellten flächigen nachgiebigen Verbundmaterial, welches eine Trägerschicht aus einem nachgiebigen Material, insbesondere in Form eines Textilmaterials, und eine hiermit verbundene, demgegenüber starrere Deckschicht aus Holzfurnier aufweist, umfasst das Holzfurnier der Deckschicht demnach eine in Form einer Mehrzahl an Nuten ausgebildete, mittels Lasergravieren eingravierte Struktur.

Die Erfindung sieht folglich vor, dass zunächst - nachdem der flächige Verbundkörper durch Verbinden, wie beispielsweise Verkleben, der textilen Trägerschicht mit dem noch nicht gravierten Holzfurnier der dekorativen Deckschicht verbunden worden ist - die gewünschte Struktur, z.B. mittels eines geeigneten CAD-Programms, erstellt und in die Steuereinrichtung bzw. in eine dieser zugeordnete Speichereinheit der programmtechnisch eingerichteten Lasergraviervorrichtung eingelesen wird, wie es als solches aus der eingangs zitierten EP 2 776 240 B1 bekannt ist. Wie ebenfalls hieraus bekannt, wird sodann das derart vorgefertigte Verbundmaterial auf dem Arbeitstisch der Lasergraviervorrichtung derart platziert, dass sich das Holzfurnier der Deckschicht des Verbundmaterials auf der dem Arbeitstisch abgewandten Seite befindet und somit den mit der Steuereinrichtung der Lasergraviervorrichtung in Verbindung stehenden Laserköpfen exponiert ist. Sodann werden die Laserköpfe der Lasergraviervorrichtung aktiviert, um die jeweilige Struktur in Form von Nuten mittels des von einem jeweiligen Laserkopf erzeugten Laserstrahls in das Holzfurnier der Deckschicht des Verbundmaterials einzugravieren.

Die Erfindung sieht dabei vor, dass die wenigstens zwei mit der Steuereinrichtung in Verbindung stehenden Laserköpfe mittels des Laserstrahls eines jeweiligen Laserkopfes die Struktur gleichzeitig in benachbarte, einem jeweiligen Laserkopf zugeordnete Bereiche des Holzfurniers der Deckschicht des Verbundmaterials eingravieren, wobei im Falle von zwei Laserköpfen z.B. der eine Laserkopf die Struktur in einen linken längsseitigen Bereich der Deckschicht eingraviert, während gleichzeitig der andere Laserkopf die Struktur in einem rechten längsseitigen Bereich der Deckschicht eingraviert, so dass ein zeiteffektives Eingravieren der Struktur bei zugleich hoher Präzision möglich ist, da die Laserköpfe unter einem jeweils optimalen Abstand von dem Holzfurnier der Deckschicht angeordnet werden können und sowohl die Strahllänge als auch der Einfallswinkel der Laserstrahlen beider bzw. aller Laserköpfe sehr ähnlich gewählt werden kann, so dass sich eine einheitliche und homogene Struktur in höchst präziser Weise über die gesamte Fläche auch großformatiger flächiger Verbundkörper ergibt. Um zu verhindern, dass die von verschiedenen Laserköpfen gravierten Bereiche des Holzfurniers der Deckschicht aufgrund von auch nur geringfügigen Diskontinuitäten der Struktur im Übergangsbereich dieser Bereiche sichtbar sind und auf diese Weise den ästhetischen Gesamteindruck beeinträchtigen und/oder eine bereichsweise veränderte Nachgiebigkeit des Verbundkörpers verursachen, sieht die Erfindung insbesondere vor, dass die Laserköpfe derart programmtechnisch gesteuert werden, dass in einem ersten Überlappungsabschnitt der benachbarten Bereiche des Verbundmaterials die Struktur zufällig teilweise von dem Laserstrahl des einen Laserkopfes und teilweise von dem Laserstrahl des anderen Laserkopfes in das Holzfurnier der Deckschicht eingraviert wird. Die von einem jeweiligen Laserkopf der Lasergraviervorrichtung bearbeiteten Bereiche des Verbundkörpers sind folglich erfindungsgemäß nicht jeweils einem festen und unveränderlichen, aneinander angrenzenden Arbeitsbereich eines jeweiligen Laserkopfes zugeordnet, sondern überlappen die benachbarten Arbeitsbereiche eines jeweiligen Laserkopfes in dem ersten Überlappungsabschnitt, in welchem die Struktur zufällig teilweise von dem Laserstrahl des einen Laserkopfes und teilweise von dem Laserstrahl des anderen Laserkopfes in das Holzfurnier der Deckschicht eingraviert wird. Auf diese Weise und entsprechend der Erfindung ergibt sich keine scharfe Grenze zwischen den Arbeitsbereichen der Laserköpfe und folglich auch kein sichtbarer Übergang der von verschiedenen Laserköpfe bearbeiteten Bereiche der Deckschicht, wobei der erste Überlappungsabschnitt vorzugsweise z.B. eine Breite zwischen etwa 2 mm und etwa 50 cm, insbesondere zwischen etwa 5 mm und etwa 25 cm, besitzen kann.

Ein für die zufällige Zuordnung des einen oder des anderen Laserkopfes zum Eingravieren der Struktur in das Holzfurnier der Dekorschicht in dem ersten Überlappungsabschnitt geeigneter Algorithmus kann zweckmäßigerweise in der Steuersoftware der Steuereinrichtung der Lasergraviervorrichtung hinterlegt sein, wobei die Breite des ersten Überlappungsabschnittes, z.B. mittels einer üblichen Eingabeeinrichtung, wie einem Keyboard, einem Touchscreen oder dergleichen, vorzugsweise einstellbar sein kann, um sie gegebenenfalls an die jeweilige Ausgestaltung der gewünschten Struktur anpassen zu können.

Sofern die Struktur in Form von sich zumindest teilweise zwischen zwei benachbarten, einem jeweiligen Laserkopf zugeordneten Bereichen des Verbundmaterials erstreckender Nuten in das Holzfurnier der Deckschicht eingraviert wird, wie es bei gattungsgemäßen flächigen Verbundkörpern üblicherweise der Fall ist, können insbesondere die Anfangs- bzw. Endpunkte der mittels des Laserstrahls des einen Laserkopfes erzeugten Nuten sowie die End- bzw. Anfangspunkte der mittels des Laserstrahls des anderen Laserkopfes erzeugten Nuten in dem ersten Überlappungsabschnitt zufällig festgelegt werden. Jene Nuten der Struktur, welche sich von dem von einem der Laserköpfe bearbeiteten Bereich über den ersten Überlappungsabschnitt hinweg in den benachbarten, von einem anderen Laserkopf bearbeiteten Bereich des Holzfurniers der Deckschicht erstrecken, weisen folglich in dem ersten Überlappungsabschnitt in zufälliger Weise versetzt angeordnete Anfangs- bzw. Endpunkte auf, ab welchen der Laserstrahl des einen Laserkopfes bzw. bis zu welchen der Laserstrahl des anderen Laserkopfes die jeweilige Nut in das Holzfurnier der Deckschicht eingraviert hat.

Wie bereits angedeutet, macht es das erfindungsgemäße Verfahren aufgrund seiner hohen Präzision in Bezug auf die in sehr ähnlichen Winkeln auf das Holzfurnier der Deckschicht einwirkenden Laserstrahlen der Laserköpfe möglich, dass die in Form einer Mehrzahl an Nuten in das Holzfurnier der Deckschicht eingravierte Struktur derart eingraviert wird, dass die Trägerschicht im Wesentlichen unversehrt bleibt, wohingegen das Holzfurnier der Deckschicht zumindest teilweise oder im Wesentlichen vollständig durchtrennt wird. Das Holzfurnier der Deckschicht sollte hierbei mit Vorteil zumindest größtenteils, d.h. insbesondere zu wenigstens etwa 70% seiner Dicke, vorzugsweise zu wenigstens etwa 80% seiner Dicke, höchst vorzugsweise zu wenigstens etwa 90% seiner Dicke, oder auch im Wesentlichen vollständig durchtrennt werden, so dass dem Verbundmaterial eine sehr hohe Nachgiebigkeit bei gleichwohl sehr hoher mechanischer Festigkeit verliehen werden kann.

Gemäß einer vorteilhaften Ausgestaltung kann ferner vorgesehen sein, dass der Arbeitstisch der Lasergraviervorrichtung mit dem Verbundmaterial, insbesondere im Wesentlichen kontinuierlich oder semikontinuierlich, an den Laserköpfen vorbei verlagert wird, um die Struktur sukzessive in benachbarte Bereiche des Holzfurniers der Deckschicht einzugravieren, wobei die Verlagerungsrichtung des Arbeitstischs im Wesentlichen parallel zur Erstreckungsrichtung des ersten Überlappungsabschnittes zwischen den Laserköpfen gewählt wird. Auf diese Weise lassen sich sehr großformatige Bahnen des Verbundmaterials sehr zeiteffizient praktisch kontinuierlich verarbeiten und werden Bestückungs- bzw. Entnahmezeiten minimiert, wobei das Verbundmaterial zweckmäßigerweise derart sukzessive verlagert wird, dass es den einem jeweiligen Laserkopf zugeordneten Arbeitsbereichen sukzessive zugeführt wird und sodann, nachdem die Struktur in die jeweiligen Bereiche des Holzfurniers der Deckschicht eingraviert worden ist, weiterverlagert wird, um die folgenden, einem jeweiligen Laserkopf zugeordneten Arbeitsbereiche zu bearbeiten. Darüber hinaus ist es auf diese Weise beispielsweise denkbar, die Trägerschicht aus Textilmaterial in Form einer Endlosbahn bereitzustellen, indem letztere z.B. von einer Rolle abgewickelt wird, wonach die abgewickelte Endlosbahn sukzessive mit Holzfurnieren der Deckschicht verklebt wird und das auf diese Weise im Wesentlichen kontinuierlich vorgefertigte flächige Verbundmaterial mittels des sukzessive verlagerten Arbeitstischs den Laserköpfen zugeführt wird, um die Struktur in die Deckschicht einzugravieren. Das nach dem Lasergravieren hoch flexible Verbundmaterial kann schließlich entsprechend der gewünschten Dimensionen abgelängt oder in Form eines Endlosmaterials wiederum auf Rollen gewickelt werden.

Die Verlagerung des Arbeitstischs kann dabei zweckmäßigerweise programmtechnisch mit den Laserköpfen synchronisiert werden, indem ein mit der Steuereinrichtung der Laserköpfe in Verbindung stehender Antrieb des Arbeitstischs den Arbeitstisch in Abhängigkeit von dem Bearbeitungszustand der Struktur verlagert.

Der Arbeitstisch kann zu diesem Zweck beispielsweise einen zur Aufnahme des Verbundmaterials geeigneten Schlitten aufweisen, welcher von dem motorischen Antrieb angetrieben und entlang einer Führung, wie einer Linearführung, an den Laserköpfen vorbeigeführt wird. Stattdessen kann der Arbeitstisch beispielsweise auch einen zur Aufnahme des Verbundmaterials geeigneten Bandförderer, z.B. in Form eines umlaufenden Trägerbandes, umfassen, welches von dem motorischen Antrieb angetrieben ist. Alternativ ist es beispielsweise denkbar, dass der Arbeitstisch eine zur Aufnahme des Verbundmaterials geeignete Rollenbahn mit einer Mehrzahl an parallel angeordneten Rollen oder Walzen umfasst, von welchen zumindest einige mittels des motorischen Antriebs drehangetrieben sind.

In Verbindung mit einer solchen, im Wesentlichen kontinuierlichen oder semikontinuierlichen Zuführung des Verbundmaterials an die Laserköpfe erweist es sich ferner als vorteilhaft, wenn ein jeweiliger Laserkopf derart programmtechnisch gesteuert wird, dass in einem sich im Wesentlichen senkrecht zur Verlagerungsrichtung des Arbeitstischs erstreckenden zweiten Überlappungsabschnitt benachbarter, jeweils demselben Laserkopf zugeordneter Bereiche des Verbundmaterials die Struktur von dem Laserstrahl des jeweiligen Laserkopfes zufällig vor oder nach einem Verlagerungsschritt des Arbeitstischs in das Holzfurnier der Deckschicht eingraviert wird. Um auch zu verhindern, dass die von jeweils einem und demselben Laserkopf in Verlagerungsrichtung des Arbeitstischs nebeneinander angeordneten und in zeitlicher Abfolge nacheinander gravierten Bereiche des Holzfurniers der Deckschicht aufgrund von auch nur geringfügigen Diskontinuitäten der Struktur im Übergangsbereich dieser Bereiche sichtbar sind und auf diese Weise den ästhetischen Gesamteindruck beeinträchtigen und/oder eine bereichsweise veränderte Nachgiebigkeit des Verbundkörpers verursachen, sieht die Erfindung - ähnlich wie in Bezug auf den zwischen den Arbeitsbereichen benachbarter Laserköpfe gebildeten ersten Überlappungsabschnitt - demnach vor, dass ein jeweiliger Laserkopf derart programmtechnisch gesteuert wird, in einem jeweiligen, sich etwa senkrecht zur Verlagerungsrichtung des Arbeitstischs erstreckenden zweiten Überlappungsabschnitt der benachbarten Bereiche des Verbundmaterials die Struktur von dem Laserstrahl des jeweiligen (desselben) Laserkopfes zufällig teilweise vor einem Verlagerungsschritt des Arbeitstischs und teilweise nach einem Verlagerungsschritt des Arbeitstischs in das Holzfurnier der Deckschicht eingraviert wird. Auf diese Weise ergibt sich auch keine scharfe Grenze zwischen den den Laserköpfen mittels des verlagerbaren Arbeitstischs sukzessive zugeführten Bereichen des Holzfurniers der Deckschicht und folglich auch kein sichtbarer Übergang der von einem jeweiligen Laserkopf sukzessive bearbeiteten Bereiche der Deckschicht, wobei der zweite Überlappungsabschnitt (wie auch der erste Überlappungsabschnitt; siehe oben) vorzugsweise z.B. eine Breite zwischen etwa 2 mm und etwa 50 cm, insbesondere zwischen etwa 5 mm und etwa 25 cm, besitzen kann.

Sofern die Struktur, wie weiter oben erwähnt, in Form von sich zumindest teilweise zwischen zwei benachbarten, jeweils demselben Laserkopf zugeordneten Bereichen des Verbundmaterials erstreckender Nuten in das Holzfurnier der Deckschicht eingraviert wird, wie es bei gattungsgemäßen flächigen Verbundkörpern üblicherweise der Fall ist, können wiederum insbesondere die Anfangs- bzw. Endpunkte der mittels des Laserstrahls des jeweiligen Laserkopfes vor einem Verlagerungsschritt des Arbeitstischs erzeugten Nuten sowie die End- bzw. Anfangspunkte der mittels des Laserstrahls des jeweiligen Laserkopfes nach einem Verlagerungsschritt des Arbeitstischs erzeugten Nuten in dem zweiten Überlappungsabschnitt zufällig festgelegt werden. Jene Nuten der Struktur, welche sich von dem von einem jeweiligen Laserkopf vor einem Verlagerungsschritt des Arbeitstischs bearbeiteten Bereich über den zweiten Überlappungsabschnitt hinweg in den benachbarten, von demselben Laserkopf nach dem Verlagerungsschritt bearbeiteten Bereich des Holzfurniers der Deckschicht erstrecken, weisen folglich auch in dem zweiten Überlappungsabschnitt in zufälliger Weise versetzt angeordnete Anfangs- bzw. Endpunkte auf, bis zu welchen der Laserstrahl des jeweiligen Laserkopfes bzw. ab welchen der Laserstrahl desselben Laserkopfes die jeweilige Nut vor oder nach einem jeweiligen Verlagerungsschritt des Arbeitstischs in das Holzfurnier der Deckschicht eingraviert hat.

Um für eine stets exakte, ebene Ausrichtung des auf dem Arbeitstisch befindlichen Verbundmaterials während der Bearbeitung mittels der Laserköpfe zu sorgen, kann gemäß einer vorteilhaften Weiterbildung vorgesehen sein, dass das Verbundmaterial zumindest während des Eingravierens der Struktur an den Arbeitstisch angesaugt wird. Dies kann mittels beliebiger, als solche auf dem Stand der Technik bekannter Unterdruckerzeuger, z.B. in Form von Pumpen, geschehen, welche das Verbundmaterial infolge Unterdruckes gegen den Arbeitstisch, z.B. gegen dessen Oberfläche, gegen dessen Trägerband oder gegen dessen Rollenbahn, anpressen.

Wie bereits angedeutet, kann die Lasergraviermaschine aus den weiter oben genannten Gründen vorteilhafterweise wenigstens zwei stationäre galvanometrische Laserköpfe aufweisen, welche wenigstens eine(n) mit der Steuereinrichtung in Verbindung stehende(n) Spiegel und/oder Linse aufweisen, wobei die Laserköpfe mittels der Steuereinrichtung derart programmtechnisch gesteuert werden, dass ihre Spiegel und/oder Linsen entsprechend der in das Holzfurnier der Deckschicht einzugravierenden Struktur verlagert werden. Derartige galvanometrische Laserköpfe sind als solche aus dem Stand der Technik bekannt, wie beispielsweise aus der eingangs zitierten DE 196 34 190 A1, wobei ihre Vorteile vornehmlich darin bestehen, dass sie aufgrund dessen, dass lediglich die zur gesteuerten Ablenkung der Laserstrahlen dienenden Spiegel und/oder Linsen beweglich sein müssen, die Laserköpfe selbst aber stationär angeordnet sein können, sehr zeit- und kosteneffizient sind und insbesondere keine aufwändige Mechanik zur translatorischen Verlagerung des Laserkopfes erfordern.

Wie bereits erwähnt, kann aufgrund der Mehrzahl an Laserköpfen auch im Falle von großformatigen Verbundkörpern der Abstand zwischen dem Holzfurnier der Deckschicht und den Laserköpfen auf das optimale Maß eingestellt werden, um einerseits für die Erzeugung einer Struktur mit sehr schmalen Nuten infolge stark fokussierter "kurzer" Laserstrahlen zu sorgen und andererseits zu verhindern, dass in die Dampfphase überführte Bestandteile des organischen Materials der Deckschicht an den Laserköpfen abgeschieden wird und letztere einer häufigen Reinigung bedürfen, wobei die Laserköpfe vorzugsweise z.B. in einem Abstand zwischen etwa 10 cm und etwa 150 cm, insbesondere zwischen etwa 30 cm und etwa 130 cm, vorzugsweise zwischen etwa 50 cm und etwa 110 cm, von der Oberfläche des Holzfurniers der Deckschicht des Verbundmaterials angeordnet werden.

Sofern gewünscht, kann das Holzfurnier der Deckschicht nach dem Lasergravieren ferner mit einer Lackschicht versehen werden, um für eine Versiegelung der in aller Regel porösen Oberfläche des Holzfurniers der Deckschicht bei einem sehr hochwertigen ästhetischen Gesamteindruck des flächigen Verbundmaterials zu sorgen.

Ein mittels des erfindungsgemäßen Verfahrens hergestelltes flächiges nachgiebiges Verbundmaterial kann folglich insbesondere auch dann, wenn es verhältnismäßig großformatige Abmessungen besitzt, eine in das Holzfurnier der Deckschicht mittels Lasergravierens erzeugte Struktur aufweisen, welche sich gleichmäßig über im Wesentlichen die gesamte Fläche des Holzfurniers der Deckschicht erstreckt. Die Mehrzahl an Nuten der in das Holzfurnier der Deckschicht eingravierten Struktur kann dabei vorzugsweise das Holzfurnier der Deckschicht zumindest teilweise oder im Wesentlichen vollständig durchtrennen, wohingegen die Trägerschicht insbesondere im Wesentlichen unversehrt ist, wobei auf die obigen Ausführungen verwiesen sei. Darüber hinaus kann die Mehrzahl an Nuten der in das Holzfurnier der Deckschicht eingravierten Struktur vorteilhafterweise eine im Wesentlichen gleichmäßige Breite und/oder eine im Wesentlichen gleichmäßige Tiefe aufweisen, so dass sich bei einer hohen Ästhetik eine einheitliche Nachgiebigkeit über die gesamte Fläche des Verbundmaterials ergibt, welche weitestgehend jener von herkömmlichen Leder- oder Textilmaterialien entspricht. Darüber hinaus kann das Holzfurnier der Deckschicht bedarfsweise beispielsweise mit einer Lackschicht versehen sein.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1a: eine schematische perspektivische Ansicht einer die Bestandteile eines Verbundmaterials bildenden Trägerschicht und Deckschicht anlässlich der Vorfertigung eines Rohlings des Verbundmaterials;
- Fig. 1b: eine schematische perspektivische Ansicht einer Ausführungsform eines galvanometrischen Laserkopfes einer Lasergraviervorrichtung gemäß den Fig. 2 bis 6 während des Eingravierens einer aus einer Mehrzahl an Nuten gebildeten Struktur in die Deckschicht des Verbundmaterials gemäß Fig. 1a;
- Fig. 1c: eine schematische perspektivische Ansicht einer Ausführungsform des nachgiebigen Verbundmaterials nach dem Lasergravieren gemäß Fig. 1b;
- Fig. 2: eine schematische perspektivische Ansicht einer zur Durchführung eines erfindungsgemäßen Verfahrens geeigneten Ausführungsform einer Lasergraviervorrichtung;
- Fig. 3: eine schematische Frontansicht der Lasergraviervorrichtung gemäß der Fig. 2;
- Fig. 4: eine schematische Seitenansicht der Lasergraviervorrichtung gemäß den Fig. 2 und 3;
- Fig. 5: eine schematische Draufansicht auf die Lasergraviervorrichtung gemäß den Fig. 2 bis 4;
- Fig. 6: eine schematische perspektivische Detailansicht zweier galvanometrischer Laserköpfe der Lasergraviervorrichtung gemäß den Fig. 2 bis 5 während des gleichzeitigen Eingravierens einer aus einer Mehrzahl an Nuten gebildeten Struktur in die Deckschicht des Verbundmaterials;
- Fig. 7: eine schematische Draufsicht auf das Holzfurnier der Deckschicht eines Verbundmaterials, welches mittels Lasergravierens mit einer aus einer Mehrzahl an Nuten gebildeten Struktur versehen worden ist, jedoch ohne dass zwischen den verschiedenen, von den jeweiligen Laserköpfen bearbeiteten Bereichen Überlappungsabschnitte vorgesehen worden sind; und
- Fig. 8: eine schematische Draufsicht auf vier exemplari- sche Nuten der mittels Lasergravierens unter Verwendung der Lasergraviervorrichtung gemäß den Fig. 2 bis 6 in das Holzfurnier der Deckschicht eingravierten Struktur, welche sich zwischen zwei von verschiedenen Laserköpfen der Lasergraviervorrichtung erzeugten Bereichen des Verbundmaterials über einen ersten Überlappungsabschnitt hinweg erstrecken.

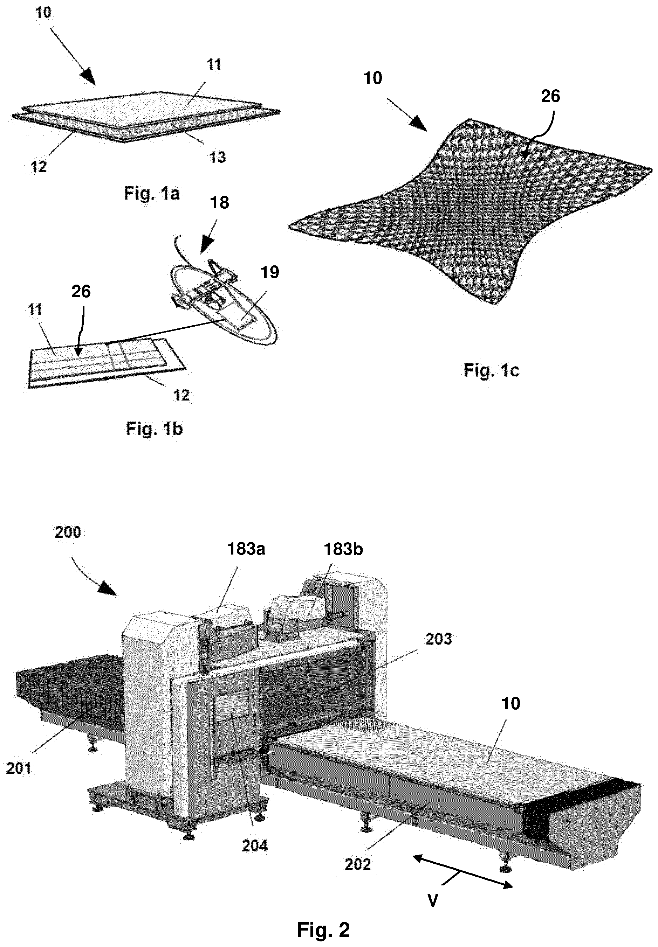

In der Fig. 1a ist eine Situation anlässlich der Vorfertigung eines Rohlings eines flächigen Verbundmaterials wiedergegeben, welches insgesamt mit dem Bezugszeichen 10 versehen ist. Das Verbundmaterial 10 umfasst eine Trägerschicht 12 aus einem nachgiebigen Material, wie einem Textilmaterial, sowie eine demgegenüber starrere Deckschicht 11 aus einem dekorativen Holzfurnier. Um den Rohling des Verbundmaterials 10 vorzufertigen, wird die Trägerschicht 12 mit der Deckschicht 11 verbunden, was beispielsweise mittels einer zwischen der Trägerschicht 12 und der Deckschicht 11 angeordneten Kleberschicht 13 geschehen kann.

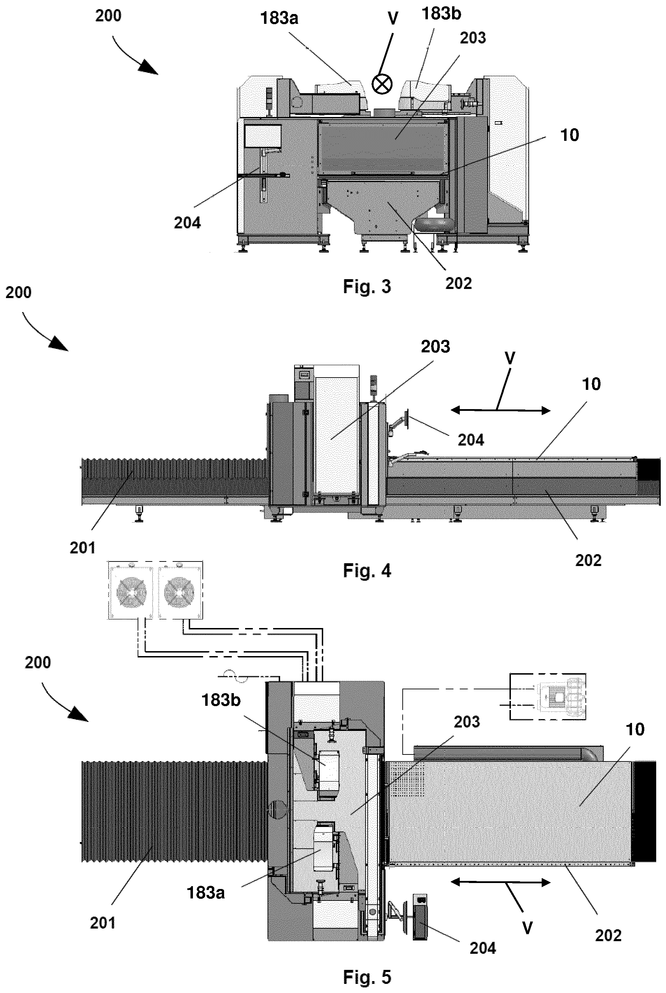

In der Fig. 1b ist eine Ausführungsform eines der galvanometrischen Laserköpfe 18 einer weiter unten unter Bezugnahme auf die Fig. 2 bis 6 näher erläuterten Lasergraviervorrichtung schematisch wiedergegeben, welcher zum Eingravieren einer aus einer Mehrzahl an Nuten gebildeten Struktur 26 in das Holzfurnier der Deckschicht 11 des Rohlings des Verbundmaterials 10 gemäß der Fig. 1a dient, um die Nachgiebigkeit des Holzfurniers der Deckschicht 11 zu erhöhen und ihm einen ästhetisch hochwertigen Gesamteindruck zu verleihen. Bei dem Laserkopf 18 handelt es sich im vorliegenden Fall um einen stationär gehaltenen galvanometrischen Laserkopf 18, welche einen im dreidimensionalen Raum weitestgehend frei verlagerbaren Spiegel 19 aufweist, um den erzeugten Laserstrahl in die gewünschte Richtung abzulenken. Der Laserkopf 18 einschließlich eines nicht zeichnerisch erkennbaren Antriebs seines Spiegels 19 stehen mit einer gleichfalls nicht zeichnerisch wiedergegebenen Steuereinrichtung der Lasergraviervorrichtung (vgl. die Fig. 2 bis 6) in Wirkverbindung, um den mit dem verlagerbaren Spiegel 19 ausgestatteten Laserkopf 18 derart mittels der Steuereinrichtung programmtechnisch steuern zu können, dass der Spiegel 19 entsprechend der in das Holzfurnier der Deckschicht 11 einzugravierenden Struktur 26 verlagert wird. Die jeweils gewünschte Struktur 26 ist dabei im Vorfeld, z.B. mittels eines geeigneten CAD-Programms, erstellt und in die Steuereinrichtung eingelesen worden.

Die Fig. 1c zeigt das fertige, nunmehr ähnlich bekannter Leder- oder Textilmaterialien sehr nachgiebige flächige Verbundmaterial 10, nachdem die Struktur 26, welche sich im vorliegenden Fall im Wesentlichen gleichförmig über praktisch die gesamte Fläche der Deckschicht 11 erstreckt, in das Holzfurnier dessen Deckschicht 11 mittels Lasergravierens eingraviert worden ist.

In den Fig. 2 bis 6 ist eine Ausführungsform einer zur automatisierten Durchführung des erfindungsgemäßen Verfahrens zur Herstellung des flächigen nachgiebigen Verbundmaterials 10 gemäß der Fig. 1c programmtechnisch eingerichtete Lasergraviervorrichtung, welche insgesamt mit dem Bezugszeichen 200 versehen ist, schematisch wiedergegeben. Die Lasergraviervorrichtung 200 umfasst einen entlang einer Führung 201, insbesondere in Form einer Linearführung, in Richtung des Pfeils V gesteuert, insbesondere etwa horizontal, verlagerbaren, im vorliegenden Fall im Wesentlichen nach Art eines Schlittens ausgestalteten Arbeitstisch 202, welcher zur Aufnahme eines zu bearbeitenden, insbesondere relativ großformatigen und z.B. im Wesentlichen bahnförmigen Verbundmaterials gemäß der Fig. 1a dient und das Verbundmaterial 10 einerseits sukzessive einem Laserbearbeitungsbereich 203 zuzuführen vermag, andererseits nach der Entnahme eines fertig verarbeiteten Verbundmaterials gemäß der Fig. 1c wieder in die entgegengesetzte Richtung zurück verlagert werden kann, um in weitgehend kontinuierlicher oder semikontinuierlicher Weise eine Vielzahl an Verbundmaterialien zu gravieren und dabei eine effiziente Massenfertigung zu ermöglichen. Die zur Aufnahme des Verbundmaterials 10 dienende Oberfläche des Arbeitstischs 202 kann vorzugsweise mit einem nicht zeichnerisch dargestellten Unterdruckerzeuger in Verbindung stehen, um das Verbundmaterial 10 während des Lasergravierens gegen den Arbeitstisch anzudrücken und auf diese Weise für eine exakte, gleichbleibende und reproduzierbare Ausrichtung des Verbundmaterials in dem Laserbearbeitungsbereich 203 zu sorgen. Ein Antrieb des Arbeitstischs 202 steht mit einer ebenfalls nicht zeichnerisch wiedergegebenen Steuereinrichtung der Lasergraviervorrichtung 200 in Verbindung, welche in als solcher bekannten Weise eine zentrale Datenverarbeitungseinheit umfasst, die im vorliegenden Fall mit einer Eingabeeinrichtung 204 ausgestattet ist, um eine gewünschte, in die Deckschicht 11 des Verbundmaterials 10 einzugravierende Struktur, ein gewünschtes Bearbeitungsprogramm etc. einzugeben und/oder auszuwählen. Darüber hinaus umfasst die Lasergraviervorrichtung mehrere - hier zwei - gleichfalls mit der Steuereinrichtung in Verbindung stehende und oberhalb des Laserbearbeitungsbereichs 203 stationär angeordnete, aber gegebenenfalls höhenverlagerbare galvanometrische Laserköpfe 183a, 183b, welche unter einem sich senkrecht zur Verlagerungsrichtung V des Arbeitstischs 202 angeordneten Abstand voneinander angeordnet sind und in ihrem Aufbau jenem gemäß Fig. 1 entsprechen. Es sei der Vollständigkeit halber jedoch darauf hingewiesen, dass die Laserköpfe 183a, 183b nicht notwendigerweise senkrecht zur Verlagerungsrichtung V des Arbeitstischs 202 angeordnet sein müssen, sondern demgegenüber z.B. auch versetzt angeordnet sein können.

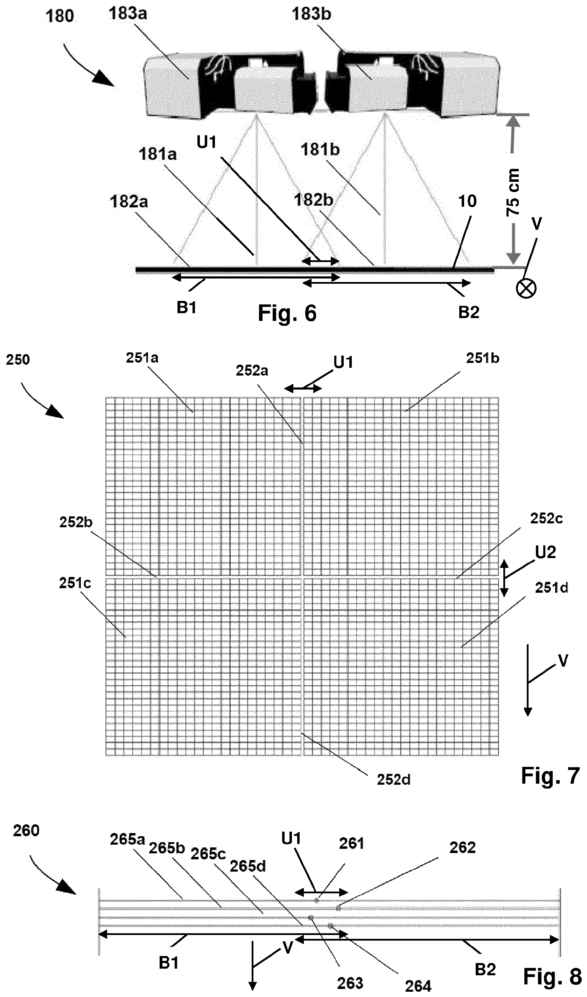

Wie insbesondere der Fig. 6 zu entnehmen ist, sind die Laserköpfe 183a, 183b beispielsweise in einem Abstand von etwa 75 cm von dem Arbeitstisch 202 bzw. dem hierauf positionierten Verbundmaterial 10 angeordnet und dienen dem Zweck, mittels eines jeweiligen, durch programmtechnisch gesteuerte Verlagerung ihres Spiegels 19 (vgl. die Fig. 1b) ablenkbaren Laserstrahls 181a, 181b die Struktur 26 (vgl. die Fig. 1c) gleichzeitig in benachbarte, dem jeweiligen Arbeitsbereich 182a, 182b eines jeweiligen Laserkopfes 183a, 183b zugeordnete Bereiche B1, B2 des Holzfurniers der Deckschicht 11 des Verbundmaterials 10 einzugravieren, wobei die Laserköpfe 183a, 183b erfindungsgemäß derart programmtechnisch steuerbar sind, dass in einem ersten Überlappungsabschnitt U1 der benachbarten Bereiche B1, B2 des Verbundmaterials 10 die Struktur 26 zufällig teilweise von dem Laserstrahl 181a, 181b des einen Laserkopfes 183a, 183b und teilweise von dem Laserstrahl 181b, 181a des anderen Laserkopfes 183b, 183a in das Holzfurnier der Deckschicht 11 eingraviert wird. Die Arbeitsbereich 182a, 182b der Laserköpfe 183a, 183b bzw. die Bereiche B1, B2, in welchen die Struktur 26 in die Deckschicht 11 eingraviert wird, sind erfindungsgemäß also nicht stationär, sondern überschneiden sich in dem erste Überlappungsbereich U1, in welchem Teile der Struktur 26 zufällig von dem Laserstrahl 181a, 181b des einen oder von dem anderen Laserkopfes 183a, 183b in die Deckschicht eingraviert werden, um sicherzustellen, dass insbesondere bei einer sich von dem Arbeitsbereich 182a des einen Laserkopfes 183a bzw. von dem einen Bereich B1 der Deckschicht 11 in den Arbeitsbereich 182b des anderen Laserkopfes 183b bzw. in den anderen Bereich B2 der Deckschicht 11 des Verbundmaterials 10 hinein erstreckenden Nut der Struktur 26 ein fließender, nicht sichtbarer und die Werkstoffeigenschaften des fertig lasergravierten Verbundkörpers 10, wie insbesondere dessen Nachgiebigkeit, lokal nicht beeinträchtigender Übergang erzeugt wird.

In ähnlicher Weise sind die Laserköpfe 183a, 183b vorzugsweise derart programmtechnisch steuerbar, dass in einem sich im Wesentlichen senkrecht zur Verlagerungsrichtung V des Arbeitstischs 202, wenn dieser zur sukzessiven Bearbeitung des Verbundmaterials 10 schrittweise in Richtung des Pfeils V verlagert wird, erstreckenden zweiten Überlappungsabschnitt U2 (vgl. die Fig. 7) benachbarter, jeweils demselben Laserkopf 183a, 183b zugeordneter Bereiche des Verbundmaterials 10 die Struktur 26 von dem Laserstrahl 181a, 181b des jeweiligen Laserkopfes 183a 183b zufällig teilweise vor einem Verlagerungsschritt des Arbeitstischs 202 und teilweise nach einem Verlagerungsschritt des Arbeitstischs 202 in das Holzfurnier der Deckschicht 11 eingraviert wird. Die in Verlagerungsrichtung V des Arbeitstischs 202 aneinander angrenzenden Arbeitsbereiche 182a, 182b eines jeweiligen Laserkopfes bzw. die in Verlagerungsrichtung V des Arbeitstischs 202 aneinander angrenzenden Bereiche B1, B2, in welchen die Struktur 26 in die Deckschicht 11 eingraviert wird, sind also gleichfalls vorzugsweise nicht stationär, sondern überschneiden sich in dem zweiten Überlappungsbereich U2, in welchem Teile der Struktur 26 zufällig vor oder nach einem jeweiligen Verlagerungsschritt des Arbeitstischs 202 von dem Laserstrahl 181a, 181b des jeweiligen Laserkopfes 183a, 183b in die Deckschicht eingraviert werden, um sicherzustellen, dass insbesondere auch bei einer sich über zumindest zwei Verlagerungsschritte des Arbeitstischs 202 hinweg erstreckenden Nut der Struktur 26 ein fließender, nicht sichtbarer und die Werkstoffeigenschaften des fertig lasergravierten Verbundkörpers 10, wie insbesondere dessen Nachgiebigkeit, lokal nicht beeinträchtigender Übergang erzeugt wird.

In der Fig. 7 ist eine schematische Draufsicht auf eine Struktur 250 des Holzfurniers einer Deckschicht 11 des Verbundmaterials 10 dargestellt, welche mittels Lasergravierens unter Verwendung von zwei Laserköpfen unter schrittweiser Verlagerung V eines Arbeitstischs erzeugt worden ist, aber ohne dass zwischen den verschiedenen, von den jeweiligen Laserköpfen bearbeiteten Bereichen 251a, 251b, 251c, 251d Überlappungsabschnitte U1, U2 vorgesehen worden sind. Wie aus der Fig. 7 ersichtlich, können im Falle von solchen diskreten Arbeitsbereichen eines jeweiligen Laserkopfes sowohl zwischen den benachbarten Bereichen 251a, 251c und 251b, 251d, welche von verschiedenen Laserköpfen bearbeitet worden sind, als auch zwischen den benachbarten Bereichen 251a, 251b und 251c, 251d, welche jeweils von demselben Laserkopf, aber in verschiedenen Verlagerungspositionen des Arbeitstischs bearbeitet worden sind, sichtbare Übergänge bzw. Unregelmäßigkeiten 252a, 252b, 252c, 252d der eingravierten Struktur 250 entstehen, welche es erfindungsgemäß zu verhindern gilt.

In der Fig. 8 ist eine Draufsicht auf vier exemplarische Nuten 265a, 265b, 265c, 265d der in das Holzfurnier der Deckschicht 11 des Verbundmaterials 10 eingravierten Struktur 260 dargestellt, welche sich beispielsweise zwischen zwei von verschiedenen Laserköpfen 183a, 183b der Lasergraviervorrichtung 200 gemäß den Fig. 2 bis 6 erzeugten Bereichen B1, B2 des Verbundmaterials 10 über einen ersten Überlappungsabschnitt U1 hinweg erstrecken. Zumindest Teile der Struktur 260 sind hierbei also in Form von sich zumindest teilweise zwischen zwei benachbarten, einem jeweiligen Laserkopf 183a, 183b zugeordneten Bereichen B1, B2 des Verbundmaterials 10 erstreckender Nuten 265a, 265b, 265c, 265d in das Holzfurnier der Deckschicht 11 eingraviert worden, wobei die Anfangs- bzw. Endpunkte 261, 262, 263, 264 der mittels des Laserstrahls 181a, 181b des einen Laserkopfes 183a, 183b erzeugten Nuten 265a, 265b, 265c, 265d sowie die End- bzw. Anfangspunkte 261, 262, 263, 264 der mittels des Laserstrahls 181b, 181a des anderen Laserkopfes 183b, 183a erzeugten Nuten 265a, 265b, 265c, 265d in dem ersten Überlappungsabschnitt U1 zufällig festgelegt worden sind, d.h. die Nuten 265a, 265b, 265c, 265d beginnen bzw. enden nicht an der Grenze eines jeweiligen diskreten Arbeitsbereiches eines jeweiligen Laserkopfes 183a, 183b, wie dies bei der Fig. 7 der Fall ist, sondern die Anfangs- bzw. Endpunkte 261, 262, 263, 264 der Nuten 265a, 265b, 265c, 265d sind innerhalb des ersten Überlappungsbereichs U1 zufällig und folglich versetzt zueinander festgelegt worden, um den Übergang zwischen den Arbeitsbereichen 182a, 182b der Laserköpfe 183a, 183b (vgl. auch die Fig. 6) zu "verwischen".

In entsprechender Weise kann zweckmäßigerweise vorgesehen sein, dass die Struktur 260 in Form von sich zumindest teilweise zwischen zwei benachbarten, jeweils demselben Laserkopf 183a, 183b zugeordneten Bereichen B1, B2 des Verbundmaterials 10 erstreckender Nuten 265a, 265b, 265c, 265d in das Holzfurnier der Deckschicht 11 eingraviert wird, wobei die Anfangs- bzw. Endpunkte 261, 262, 263, 264 der mittels des Laserstrahls 181a, 181b des jeweiligen Laserkopfes 183a, 183b vor einem Verlagerungsschritt des Arbeitstischs 202 erzeugten Nuten 265a, 265b, 265c, 265d sowie die End- bzw. Anfangspunkte 261, 262, 263, 264 der mittels des Laserstrahls 181a, 181b des jeweiligen Laserkopfes 183a, 183b nach einem Verlagerungsschritt des Arbeitstischs 202 ererzeugten Nuten 265a, 265b, 265c, 265d in dem zweiten Überlappungsabschnitt U2 zufällig festgelegt werden.

Sofern gewünscht, kann schließlich auch vorgesehen sein, dass das Holzfurnier der Deckschicht 11 des Verbundmaterials 10 nach dem oben beschriebenen Arbeitsgang des Lasergravierens mit einer Lackschicht (nicht gezeigt) versehen wird, was entweder manuell oder insbesondere ebenfalls in automatisierter Weise geschehen kann, indem die fertig gravierten Verbundkörper 10 z.B. mittels des Arbeitstischs 202 stückweise oder abschnittsweise einer dem Laserbearbeitungsbereich 203 der Lasergraviervorrichtung 200 nachgeordneten Lackiereinrichtung (ebenfalls nicht zeichnerisch wiedergegeben) zugeführt werden.

## Patentansprüche

1. Verfahren zur Herstellung eines flächigen nachgiebigen Verbundmaterials (10), welches eine Trägerschicht (12) aus einem nachgiebigen Material, insbesondere in Form eines Textilmaterials, und eine hiermit verbundene, demgegenüber starrere Deckschicht (11) aus Holzfurnier aufweist, wobei in das Holzfurnier der Deckschicht (11) mittels Lasergravieren eine in Form einer Mehrzahl an Nuten (265a, 265b, 265c, 265d) ausgebildete Struktur (26, 260) eingraviert wird, um die Nachgiebigkeit des Holzfurniers der Deckschicht (11) zu erhöhen, umfassend die folgenden Schritte:
- Erstellen der in das Holzfurnier der Deckschicht (11) einzugravierenden Struktur (26, 260) und Einlesen der Struktur (26, 260) in eine Steuereinrichtung einer programmtechnisch eingerichteten Lasergraviervorrichtung (200);
- Anordnen des Verbundmaterials (10) auf einem Arbeitstisch (202) der Lasergraviervorrichtung (200) derart, dass sich das Holzfurnier der Deckschicht (11) des Verbundmaterials auf der dem Arbeitstisch (202) abgewandten Seite befindet; und
- Aktivieren wenigstens eines mit der Steuereinrichtung in Verbindung stehenden Laserkopfes (18, 183a, 183b) der Lasergraviervorrichtung (200) und Eingravieren der Struktur (26, 260) in das Holzfurnier der Deckschicht (11) des Verbundmaterials (10) mittels des von dem Laserkopf (18, 183a, 183b) erzeugten Laserstrahls (181a, 181b),
**dadurch gekennzeichnet, dass** wenigstens zwei mit der Steuereinrichtung in Verbindung stehende Laserköpfe (183a, 183b) der Lasergraviervorrichtung (200) aktiviert werden, um mittels des Laserstrahls (181a, 181b) eines jeweiligen Laserkopfes (183a, 183b) die Struktur (26, 260) gleichzeitig in benachbarte, einem jeweiligen Laserkopf (183a, 183b) zugeordnete Bereiche (B1, B2) des Holzfurniers der Deckschicht (11) des Verbundmaterials (10) einzugravieren, wobei die Laserköpfe (18, 183a, 183b) derart programmtechnisch gesteuert werden, dass in einem ersten Überlappungsabschnitt (U1) der benachbarten Bereiche (B1, B2) des Verbundmaterials (10) die Struktur (26, 260) zufällig teilweise von dem Laserstrahl (181a, 181b) des einen Laserkopfes (183a, 183b) und teilweise von dem Laserstrahl (181a, 181b) des anderen Laserkopfes (183a, 183b) in das Holzfurnier der Deckschicht (11) eingraviert wird, so dass sich keine scharfe Grenze zwischen den Arbeitsbereichen der Laserköpfe und folglich auch kein sichtbarer Übergang der von verschiedenen Laserköpfen bearbeiteten Bereiche der Deckschicht ergibt.

2. Verfahren nach Anspruch 1, **dadurch gekennzeichnet, dass** die Struktur (26, 260) in Form von sich zumindest teilweise zwischen zwei benachbarten, einem jeweiligen Laserkopf (183a, 183b) zugeordneten Bereichen (B1, B2) des Verbundmaterials (10) erstreckender Nuten (265a, 265b, 265c, 265d) in das Holzfurnier der Deckschicht (11) eingraviert wird, wobei die Anfangs- bzw. Endpunkte (261, 262, 263, 264) der mittels des Laserstrahls (181a, 181b) des einen Laserkopfes (183a, 183b) erzeugten Nuten (265a, 265b, 265c, 265d) sowie die End- bzw. Anfangspunkte der mittels des Laserstrahls (181a, 181b) des anderen Laserkopfes (183a, 183b) erzeugten Nuten (265a, 265b, 265c, 265d) in dem ersten Überlappungsabschnitt (U1) zufällig festgelegt werden.

3. Verfahren nach Anspruch 1 oder 2, **dadurch gekennzeichnet, dass** die in Form einer Mehrzahl an Nuten (265a, 265b, 265c, 265d) in das Holzfurnier der Deckschicht (11) eingravierte Struktur (26, 260) derart eingraviert wird, dass die Trägerschicht (12) im Wesentlichen unversehrt bleibt, wohingegen das Holzfurnier der Deckschicht (11) zumindest teilweise oder im Wesentlichen vollständig durchtrennt wird.

4. Verfahren nach einem der Ansprüche 1 bis 3, **dadurch gekennzeichnet, dass** der Arbeitstisch (202) der Lasergraviervorrichtung (200) mit dem Verbundmaterial (10), insbesondere im Wesentlichen kontinuierlich oder semikontinuierlich, an den Laserköpfen (183a, 183b) vorbei verlagert wird, um die Struktur (26, 260) sukzessive in benachbarte Bereiche (B1, B2) des Holzfurniers der Deckschicht (11) einzugravieren, wobei die Verlagerungsrichtung (V) des Arbeitstischs (202) im Wesentlichen parallel zur Erstreckungsrichtung des ersten Überlappungsabschnittes (U1) zwischen den Laserköpfen (183a, 183b) gewählt wird.

5. Verfahren nach Anspruch 4, **dadurch gekennzeichnet, dass** die Verlagerung des Arbeitstischs (202) programmtechnisch mit den Laserköpfen (18, 183a, 183b) synchronisiert wird, indem ein mit der Steuereinrichtung der Laserköpfe (183a, 183b) in Verbindung stehender Antrieb des Arbeitstischs (202) den Arbeitstisch (202) in Abhängigkeit von dem Bearbeitungszustand der Struktur (26, 260) verlagert.

6. Verfahren nach Anspruch 4 oder 5, **dadurch gekennzeichnet, dass** der Arbeitstisch (202)
- einen zur Aufnahme des Verbundmaterials (10) geeigneten Schlitten aufweist, welcher von einem motorischen Antrieb angetrieben und entlang einer Führung (201) an den Laserköpfen (183a, 183b) vorbeigeführt wird; oder
- einen zur Aufnahme des Verbundmaterials (10) geeigneten Bandförderer, insbesondere in Form eines umlaufenden Trägerbandes, umfasst, welches von einem motorischen Antrieb angetrieben und an den Laserköpfen (183a, 183b) vorbeigeführt wird; oder
- eine zur Aufnahme des Verbundmaterials (10) geeignete Rollenbahn mit einer Mehrzahl an parallel angeordneten Rollen oder Walzen umfasst, von welchen zumindest einige mittels eines motorischen Antriebs drehangetrieben werden, um das Verbundmaterial (10) an den Laserköpfen (183a, 183b) vorbeizuführen.

7. Verfahren nach einem der Ansprüche 4 bis 6, **dadurch gekennzeichnet, dass** ein jeweiliger Laserkopf (183a, 183b) derart programmtechnisch gesteuert wird, dass in einem sich im Wesentlichen senkrecht zur Verlagerungsrichtung (V) des Arbeitstischs (202) erstreckenden zweiten Überlappungsabschnitt (U2) benachbarter, jeweils demselben Laserkopf (183a, 183b) zugeordneter Bereiche (B1, B2) des Verbundmaterials (10) die Struktur (26, 260) von dem Laserstrahl des jeweiligen Laserkopfes (183a, 183b) zufällig teilweise vor einem Verlagerungsschritt des Arbeitstischs (202) und teilweise nach einem Verlagerungsschritt des Arbeitstischs (202) in das Holzfurnier der Deckschicht (11) eingraviert wird.

8. Verfahren nach Anspruch 7, **dadurch gekennzeichnet, dass** die Struktur (26, 260) in Form von sich zumindest teilweise zwischen zwei benachbarten, jeweils demselben Laserkopf (18, 183a, 183b) zugeordneten Bereichen (B1, B2) des Verbundmaterials (10) erstreckender Nuten (265a, 265b, 265c, 265d) in das Holzfurnier der Deckschicht (11) eingraviert wird, wobei die Anfangs- bzw. Endpunkte (261, 262, 263, 264) der mittels des Laserstrahls (181a, 181b) des jeweiligen Laserkopfes (183a, 183b) vor einem Verlagerungsschritt des Arbeitstischs (202) erzeugten Nuten (265a, 265b, 265c, 265d) sowie die End- bzw. Anfangspunkte (261, 262, 263, 264) der mittels des Laserstrahls (181a, 181b) des jeweiligen Laserkopfes (183a, 183b) nach einem Verlagerungsschritt des Arbeitstischs (202) erzeugten Nuten (265a, 265b, 265c, 265d) in dem zweiten Überlappungsabschnitt (U2) zufällig festgelegt werden.

9. Verfahren nach einem der Ansprüche 1 bis 8, **dadurch gekennzeichnet, dass** das Verbundmaterial (10) zumindest während des Eingravierens der Struktur (26, 260) in das Holzfurnier der Deckschicht (11) an den Arbeitstisch (202) angesaugt wird.

10. Verfahren nach einem der Ansprüche 1 bis 9, **dadurch gekennzeichnet, dass** die Lasergraviermaschine (200) wenigstens zwei stationäre galvanometrische Laserköpfe (18, 183a, 183b) aufweist, welche wenigstens eine(n) mit der Steuereinrichtung in Verbindung stehende(n) Spiegel (19) und/oder Linse aufweisen, wobei die Laserköpfe (18, 183a, 183b) mittels der Steuereinrichtung derart programmtechnisch gesteuert werden, dass ihre Spiegel (19) und/oder Linsen entsprechend der in das Holzfurnier der Deckschicht (11) einzugravierenden Struktur (26, 260) verlagert werden.

11. Verfahren nach einem der Ansprüche 1 bis 10, **dadurch gekennzeichnet, dass** die Laserköpfe (18, 183a, 183b) in einem Abstand zwischen 10 cm und 150 cm, insbesondere zwischen 30 cm und 130 cm, vorzugsweise zwischen 50 cm und 110 cm, von der Oberfläche des Holzfurniers der Deckschicht (11) des Verbundmaterials (10) angeordnet werden.

12. Verfahren nach einem der Ansprüche 1 bis 11, **dadurch gekennzeichnet, dass** das Holzfurnier der Deckschicht (11) nach dem Lasergravieren mit einer Lackschicht versehen wird.

## Claims

1. Method for producing a planar resilient composite material (10) which has a carrier layer (12) of a resilient material, in particular in the form of a textile material, and a cover layer (11) of wood veneer which is connected to said carrier layer (12) and is more rigid in comparison to the latter, wherein a structure (26, 260) configured in the form of a plurality of grooves (265a, 265b, 265c, 265d) is engraved in the wood veneer of the cover layer (11) by means of laser engraving, so as to increase the resilience of the wood veneer of the cover layer (11), comprising the following method steps:
- establishing the structure (26, 260) to be engraved in the wood veneer of the cover layer (11), and importing the structure (26, 260) into a control apparatus of a laser engraving device (200) specified in programming terms;
- arranging the composite material (10) on a worktable (202) of the laser engraving device (200) in such a manner that the wood veneer of the cover layer (11) of the composite material is located on the side facing away from the worktable (202); and
- activating at least one laser head (18, 183a, 183b) of the laser engraving device (200) that is connected to the control apparatus, and engraving the structure (26, 260) in the wood veneer of the cover layer (11) of the composite material (10) by means of the laser beam (181a, 181b) generated by the laser head (18, 183a, 183b),
**characterized in that**
at least two laser heads (183a, 183b) of the laser engraving device (200) that are connected to the control apparatus are activated so as to, by means of the laser beam (181a, 181b) of a respective laser head (183a, 183b), engrave the structure (26, 260) simultaneously in adjacent regions (B1, B2) of the wood veneer of the cover layer (11) of the composite material (10) that are assigned to a respective laser head (183a, 183b), wherein the laser heads (18, 183a, 183b) in programming terms are controlled in such a manner that in a fist overlapping portion (U1) of the adjacent regions (B1, B2) of the composite material (10) the structure (26, 260) is engraved in the wood veneer of the cover layer (11) randomly in part by the laser beam (181a, 181b) of the one laser head (183a, 183b) and in part by the laser beam (181a, 181b) of the other laser head (183a, 183b).

2. Method according to Claim 1, **characterized in that** the structure (26, 260) is engraved in the wood veneer of the cover layer (11) in the form of grooves (265a, 265b, 265c, 265d) which at least in part extend between two adjacent regions (B1, B2) of the composite material (10) that are assigned to a respective laser head (183a, 183b), wherein the initial points and/or final points (261, 262, 263, 264) of the grooves (265a, 265b, 265c, 265d) generated by means of the laser beam (181a, 181b) of the one laser head (183a, 183b) and the final points and/or initial points of the grooves (265a, 265b, 265c, 265d) generated by means of the laser beam (181a, 181b) of the other laser head (183a, 183b) in the first overlapping portion (U1) are randomly established.

3. Method according to Claim 1 or 2, **characterized in that** the structure (26, 260) engraved in the wood veneer of the cover layer (11) in the form of a plurality of grooves (265a, 265b, 265c, 265d) is engraved in such a manner that the carrier layer (12) remains substantially intact, whereas the wood veneer of the cover layer (11) is at least in part or substantially completely cut through.

4. Method according to one of Claims 1 to 3, **characterized in that** the worktable (202) of the laser engraving device (200) with the composite material (10), is displaced past the laser heads (183a, 183b) in particular in a substantially continuous or semi-continuous manner, so as to engrave the structure (26, 260) successively in adjacent regions (B1, B2) of the wood veneer of the cover layer (11), wherein the displacement direction (V) of the worktable (202) is chosen so as to be substantially parallel to the direction of extent of the first overlapping portion (U1) between the laser heads (183a, 183b).

5. Method according to Claim 4, **characterized in that** the displacement of the worktable (202) in programming terms is synchronized with the laser heads (18, 183a, 183b) **in that** a drive of the worktable (202) that is connected to the control apparatus of the laser heads (183a, 183b) displaces the worktable (202) as a function of the processing state of the structure (26, 260).

6. Method according to Claim 4 or 5, **characterized in that** the worktable (202)
- has a slide which is suitable for receiving the composite material (10) and is driven by a motorized drive and is guided past the laser heads (183a, 183b) along a guide (201); or
- comprises a belt conveyor, in particular in the form of a revolving carrier belt, which is suitable for receiving the composite material (10) and is driven by a motorized drive and is guided past the laser heads (183a, 183b); or
- comprises a roller track which has a plurality of rolls or rollers disposed in parallel and is suitable for receiving the composite material (10), at least some of the rolls or rollers being rotationally driven by means of a motorized drive so as to guide the composite material (10) past the laser heads (183a, 183b).

7. Method according to one of Claims 4 to 6, **characterized in that** a respective laser head (183a, 183b) in programming terms is controlled in such a manner that, in a second overlapping portion (U2), extending substantially perpendicularly to the displacement direction (V) of the worktable (202), of adjacent regions (B1, B2) of the composite material (10) that are in each case assigned to the same laser head (183a, 183b), the structure (26, 260) is engraved in the wood veneer of the cover layer (11) by the laser beam of the respective laser head (183a, 183b) randomly in part before a displacement step of the worktable (202), and in part after a displacement step of the worktable (202).

8. Method according to Claim 7, **characterized in that** the structure (26, 260) is engraved in the wood veneer of the cover layer (11) in the form of grooves (265a, 265b, 265c, 265d) which at least in part extend between two adjacent regions (B1, B2) of the composite material (10) that are in each case assigned to the same laser head (18, 183a, 183b), wherein the initial points and/or final points (261, 262, 263, 264) of the grooves (265a, 265b, 265c, 265d) generated by means of the laser beam (181a, 181b) of the respective laser head (183a, 183b) before a displacement step of the worktable (202), and the final points and/or initial points (261, 262, 263, 264) of the grooves (265a, 265b, 265c, 265d) generated by means of the laser beam (181a, 181b) of the respective laser head (183a, 183b) after a displacement step of the worktable (202) in the second overlapping portion (U2) are randomly established.

9. Method according to one of Claims 1 to 8, **characterized in that** the composite material (10), at least while the structure (26, 260) is being engraved in the wood veneer of the cover layer (11), is suctioned to the worktable (202).

10. Method according to one of Claims 1 to 9, **characterized in that** the laser engraving machine (200) has at least two stationary galvanometric laser heads (18, 183a, 183b) which have at least one mirror (19) and/or lens connected to the control apparatus, wherein the laser heads (18, 183a, 183b) by means of the control apparatus are controlled in programming terms in such a manner that their mirrors (19) and/or lenses are displaced in a manner corresponding to the structure (26, 260) to be engraved in the wood veneer of the cover layer (11).

11. Method according to one of Claims 1 to 10, **characterized in that** the laser heads (18, 183a, 183b) are disposed at a spacing of between 10 cm and 150 cm, in particular between 30 cm and 130 cm, preferably between 50 cm and 110 cm, from the surface of the wood veneer of the cover layer (11) of the composite material (10).

12. Method according to one of Claims 1 to 11, **characterized in that** the wood veneer of the cover layer (11) after laser engraving is provided with a lacquer layer.

## Revendications

1. Procédé de fabrication d'un matériau composite (10) souple plat qui présente une couche de support (12) constituée d'un matériau souple, en particulier sous forme d'un matériau textile, et une couche de recouvrement (11) reliée à celle-ci, plus rigide par rapport à celle-ci, constituée de placage de bois, dans lequel une structure (26, 260) réalisée sous forme d'une pluralité de rainures (265a, 265b, 265c, 265d) est gravée dans le placage de bois de la couche de recouvrement (11) à l'aide d'une gravure laser pour augmenter la souplesse du placage de bois de la couche de recouvrement (11), comprenant les étapes suivantes :
- création de la structure (26, 260) à graver dans le placage de bois de la couche de recouvrement (11) et lecture de la structure (26, 260) dans un appareil de commande d'un dispositif de gravure laser (200) configuré par programmation technique ;
- agencement du matériau composite (10) sur une table de travail (202) du dispositif de gravure laser (200) de telle sorte que le placage de bois de la couche de recouvrement (11) du matériau composite se trouve sur le côté opposé à la table de travail (202) ; et
- activation d'au moins une tête laser (18, 183a, 183b) du dispositif de gravure laser (200) reliée à l'appareil de commande et gravure de la structure (26, 260) dans le placage de bois de la couche de recouvrement (11) du matériau composite (10) à l'aide du faisceau laser (181a, 181b) généré par la tête laser (18, 183a, 183b),
**caractérisé en ce qu'au** moins deux têtes laser (183a, 183b) du dispositif de gravure laser (200), reliées à l'appareil de commande, sont activées pour graver simultanément, à l'aide du faisceau laser (181a, 181b) d'une tête laser (183a, 183b) respective, la structure (26, 260) dans des zones (B1, B2) adjacentes du placage de bois de la couche de recouvrement (11) du matériau composite (10) associées à une tête laser (183a, 183b) respective, dans lequel les têtes laser (18, 183a, 183b) sont commandées par programmation technique de telle sorte que, dans une première section de chevauchement (U1) des zones (B1, B2) adjacentes du matériau composite (10), la structure (26, 260) est gravée de manière aléatoire en partie par le faisceau laser (181a, 181b) de l'une des têtes laser (183a, 183b) et en partie par le faisceau laser (181a, 181b) de l'autre tête laser (183a, 183b) dans le placage de bois de la couche de recouvrement (11), de sorte qu'il n'y a pas de limite nette entre les zones de travail des têtes laser et, par conséquent, pas de transition visible entre les zones de la couche de recouvrement traitées par différentes têtes laser.

2. Procédé selon la revendication 1, **caractérisé en ce que** la structure (26, 260) est gravée sous forme de rainures (265a, 265b, 265c, 265d) s'étendant au moins partiellement entre deux zones (B1, B2) adjacentes du matériau composite (10) associées à une tête laser (183a, 183b) respective dans le placage de bois de la couche de recouvrement (11), dans lequel les points de départ et de fin (261, 262, 263, 264) des rainures (265a, 265b, 265c, 265d) générées à l'aide du faisceau laser (181a, 181b) de l'une des têtes laser (183a, 183b) et les points de fin et de départ des rainures (265a, 265b, 265c, 265d) générées à l'aide du faisceau laser (181a, 181b) de l'autre tête laser (183a, 183b) sont déterminés de manière aléatoire dans la première section de chevauchement (U1).

3. Procédé selon la revendication 1 ou 2, **caractérisé en ce que** la structure (26, 260) gravée sous forme d'une pluralité de rainures (265a, 265b, 265c, 265d) dans le placage de bois de la couche de recouvrement (11) est gravée de telle sorte que la couche de support (12) reste sensiblement intacte, tandis que le placage de bois de la couche de recouvrement (11) est au moins partiellement ou sensiblement complètement sectionné.

4. Procédé selon l'une des revendications 1 à 3, **caractérisé en ce que** la table de travail (202) du dispositif de gravure laser (200) avec le matériau composite (10) est déplacée, en particulier de manière sensiblement continue ou semi-continue, en passant devant les têtes laser (183a, 183b) pour graver successivement la structure (26, 260) dans des zones (B1, B2) adjacentes du placage de bois de la couche de recouvrement (11), dans lequel la direction de déplacement (V) de la table de travail (202) est choisie sensiblement parallèle à la direction d'extension de la première section de chevauchement (U1) entre les têtes laser (183a, 183b).

5. Procédé selon la revendication 4, **caractérisé en ce que** le déplacement de la table de travail (202) est synchronisé par programmation technique avec les têtes laser (18, 183a, 183b) par le fait qu'un entraînement de la table de travail (202), relié à l'appareil de commande des têtes laser (183a, 183b), déplace la table de travail (202) en fonction de l'état de traitement de la structure (26, 260).

6. Procédé selon la revendication 4 ou 5, **caractérisé en ce que** la table de travail (202)
- présente un chariot apte à recevoir le matériau composite (10), qui est entraîné par un entraînement motorisé et passe le long d'un guide (201) devant les têtes laser (183a, 183b) ; ou
- comprend un convoyeur à bande apte à recevoir le matériau composite (10), en particulier sous forme d'une bande de support circulaire, qui est entraîné par un entraînement motorisé et passe devant les têtes laser (183a, 183b) ; ou
- comprend un train de rouleaux apte à recevoir le matériau composite (10) comportant une pluralité de rouleaux ou de cylindres agencés parallèlement, dont au moins certains sont entraînés en rotation à l'aide d'un entraînement motorisé pour faire passer le matériau composite (10) devant les têtes laser (183a, 183b).

7. Procédé selon l'une des revendications 4 à 6, **caractérisé en ce qu'une** tête laser (183a, 183b) respective est commandée par programmation technique de telle sorte que, dans une seconde section de chevauchement (U2) s'étendant sensiblement perpendiculairement à la direction de déplacement (V) de la table de travail (202) de zones (B1, B2) adjacentes du matériau composite (10) associées respectivement à la même tête laser (183a, 183b), la structure (26, 260) est gravée dans le placage de bois de la couche de recouvrement (11) de manière aléatoire, en partie avant une étape de déplacement de la table de travail (202) et en partie après une étape de déplacement de la table de travail (202), par le faisceau laser de la tête laser (183a, 183b) respective.

8. Procédé selon la revendication 7, **caractérisé en ce que** la structure (26, 260) est gravée sous forme de rainures (265a, 265b, 265c, 265d) s'étendant au moins partiellement entre deux zones (B1, B2) adjacentes du matériau composite (10) associées respectivement à la même tête laser (18, 183a, 183b) dans le placage de bois de la couche de recouvrement (11), dans lequel les points de départ et de fin (261, 262, 263, 264) des rainures (265a, 265b, 265c, 265d) générées à l'aide du faisceau laser (181a, 181b) de la tête laser (183a, 183b) respective avant une étape de déplacement de la table de travail (202) et les points de fin et de départ (261, 262, 263, 264) des rainures (265a, 265b, 265c, 265d) générées à l'aide du faisceau laser (181a, 181b) de la tête laser (183a, 183b) respective après une étape de déplacement de la table de travail (202) sont déterminés de manière aléatoire dans la seconde section de chevauchement (U2).

9. Procédé selon l'une des revendications 1 à 8, **caractérisé en ce que** le matériau composite (10) est aspiré contre la table de travail (202) au moins pendant la gravure de la structure (26, 260) dans le placage de bois de la couche de recouvrement (11).

10. Procédé selon l'une des revendications 1 à 9, **caractérisé en ce que** la machine de gravure laser (200) présente au moins deux têtes laser (18, 183a, 183b) galvanométriques fixes qui présentent au moins un miroir (19) et/ou une lentille relié(e) à l'appareil de commande, dans lequel les têtes laser (18, 183a, 183b) sont commandées à l'aide de l'appareil de commande par programmation technique de manière à ce que leurs miroirs (19) et/ou lentilles soient déplacé(e)s de manière correspondant à la structure (26, 260) à graver dans le placage de bois de la couche de recouvrement (11).

11. Procédé selon l'une des revendications 1 à 10, **caractérisé en ce que** les têtes laser (18, 183a, 183b) sont agencées à une distance comprise entre 10 cm et 150 cm, en particulier entre 30 cm et 130 cm, de préférence entre 50 cm et 110 cm, de la surface du placage de bois de la couche de recouvrement (11) du matériau composite (10).

12. Procédé selon l'une des revendications 1 à 11, **caractérisé en ce que** le placage de bois de la couche de recouvrement (11) est recouvert d'une couche de vernis après la gravure au laser.
